# EUROPEAN PATENT SPECIFICATION

(11) **EP 4 201 809 B1**
(45) Date of publication and mention of the grant of the patent: **14.08.2024**
(21) Application number: 21383187.8
(22) Date of filing: 22.12.2021
(51) Int. Cl.: B64C 7/00, B64C 9/02, F16J 15/10, F16J 15/328, B29C 71/02, B29C 64/118, B29C 64/153

(54) **METHOD FOR MANUFACTURING AN AERODYNAMIC SEAL AND THE PRODUCT THUS OBTAINED**
VERFAHREN ZUR HERSTELLUNG EINER AERODYNAMISCHEN DICHTUNG UND SO ERHALTENES PRODUKT
PROCÉDÉ DE FABRICATION D'UN JOINT AÉRODYNAMIQUE ET PRODUIT AINSI OBTENU

(43) Date of publication of application: 28.06.2023
(73) Proprietor: Adática Engineering S.L, 28906 Madrid (ES); Consejo Superior de Investigaciones Cientificas, 28006 Madrid (ES)
(72) Inventor: Denia Alonso, Alfonso, MADRID (ES); Rodríguez Hernández, Juan, MADRID (ES); Marcos Fernández, Angel, MADRID (ES); León-Calero, Marina, MADRID (ES); Reinecke, Helmut, MADRID (DE); Elvira Pujalte, Carlos, MADRID (ES); Reviriego Picón, Felipe, MADRID (ES); Gallardo, Alberto, MADRID (ES); Navarro, Rodrigo, MADRID (ES)
(74) Representative: Temiño Ceniceros, Ignacio

(56) References cited:
- US-A1- 2004 147 677
- US-A1- 2020 378 499
- US-A1- 2021 197 450

## Description

### Technical field

The present invention relates to a method for manufacturing an aerodynamic seal adapted to the geometry of complex surfaces according to claim 1 and the product thus obtained according to claim 8.

The purpose of these aerodynamic seals is to improve the aerodynamic performances of the outer surfaces of an aircraft, reducing both manufacturing and maintenance times and costs, in addition to facilitating a better fit of the seal on the aerodynamic surfaces on which it is installed compared with the aerodynamic seals manufactured with the current state of the art.

### State of the art

Despite the tight adjustment tolerances that are usually applied between the different elements that make up the external surfaces of aircrafts, sometimes spaces are generated between two of the parts thereof, whether they are fixed, mobile or a combination of both, which require the use of intermediation seals and that, among other functions, have the aim of shaping a better aerodynamic surface of the assembly. These are aerodynamic seals. The use thereof enables reducing aerodynamic resistance, avoids the appearance of turbulence and prevents the passage of particles to internal areas of the aircraft, which, in certain situations, could lead to a malfunction of the systems that are housed therein.

In the current state of the art, aerodynamic seals are flexible parts that are manufactured mainly by means of extrusion or by means of molten silicone injection moulding. The first of these methods consists of an extrusion of molten silicone through a matrix, the shape of which defines the cross section of the seal. Moreover, the second method consists of injecting the molten silicone into moulds that shape the final geometry that the seal will have. Both manufacturing technologies are interesting and relatively inexpensive in industries such as the automotive industry, wherein production runs are long and the manufacture of seals with one same geometry is carried out in large quantities. Runs of this type, however, are not very common in the aeronautical industry.

Aeronautical seals from the state of the art typically have a constant geometry along the entire length thereof. This is a direct consequence either of the manufacturing method in the case of extrusion, or of the cost associated with the need to have several moulds if a variable profile is to be had in a seal of a certain length, in the case of injection moulding. This circumstance, on the one hand, limits the options available to the team that designs the seals when offering solutions more adapted to specific geometries and functionalities, such as mechanical, durability or maintainability requirements. This is the case, for example, of the difficulty that injection moulding introduces to the use of different materials in controlled positions of the aerodynamic seal or the impossibility of making internal cavities therein that enable a better optimisation of both the weight and the elastic properties thereof.

On the other hand, the constant geometry generates difficulties in adapting aerodynamic seals to complex geometries, which are very frequent in aerodynamic surfaces. This is the case of geometries with double curvature wherein the complexity involved in designing seals adapted to them does not guarantee that the resulting seals will operate properly on those surfaces.

Currently, the process for manufacturing a typical aerodynamic seal requires the design of large and complex moulds, depending on the seal to be made, which implies very high engineering, development and manufacturing costs. As an example, typical manufacturing times for obtaining a mould for a new aerodynamic seal are several months, which has a direct impact on the design optimisation processes that may arise and on the delivery times of the final product.

In addition to the above, and for the specific case of the serial production of aircrafts, it is quite common for the manufactured parts to have a lower performance than expected of them, due to the difficulty in predicting their behaviour in flight conditions, which makes the modification thereof very frequent after analysing the performance data collected during flight tests. In the case of aerodynamic seals, however, the potential modification and optimisation thereof is currently very limited, and sometimes only allows small tweaks to the original design, due to the strong dependence between the shape of the aerodynamic seal and the large complex moulds that have allowed the initial manufacture thereof by means of injection moulding.

Consequently, the aerodynamic seals manufactured with the current state of the art do not necessarily improve the aerodynamic behaviour of the surfaces on which they are installed, they make it difficult to obtain optimised designs and they have an impact on the total weight of the surfaces on which they are installed, as well as on the manufacturing and maintenance costs and times thereof. Ultimately, the seals manufactured with the current state of the art do not fully comply with the requirements imposed on aerodynamic seals in terms of adaptation to geometry, optimisation, mechanical properties, aerodynamic performance, durability or maintenance.

More specifically, documents US5518210, US6491260B2, US8657236B2, US5845877, US2006/0032163A1, US5154577 and US4496186 are known in the current state of the art. However, none of these documents describes a solution for the technical problem derived from adapting the aerodynamic seal to the geometry of complex surfaces which does not degrade the functionality thereof and optimises its design to reduce weight, costs and maintenance times as the invention disclosed herein.

Furthermore, the document US2020/378499A1 discloses a seal for sealing a space between a first structure and second structure. The seal includes a seal base configured to couple with the first structure so as to form a respective seal with the first structure, a resilient lattice body coupled to the seal base, and a cover. The cover includes an inner surface coupled to the resilient lattice body in an opposing relationship relative to the seal base so that the cover moves towards and away from the seal base in a biasing direction of the resilient lattice body, and a bulbous outer surface configured to engage the second structure so as to form a respective seal with the second structure.

### Description of the invention

An object of the present invention is a manufacturing method that enables an aerodynamic seal to be obtained with greater adaptability to aerodynamic surfaces of complex geometry, which improves the aerodynamic behaviour of the seal, which facilitates the optimisation of the design and thus, the functionality thereof, and which enables reducing weight, costs and maintenance times in relation to the aerodynamic seals manufactured with the current state of the art. A second object of the invention is an aerodynamic seal that has a geometry adapted to fixed or mobile aerodynamic surfaces or a combination of both. These objects are achieved by the claims included in the present specification.

The present invention sets forth a method for manufacturing an aerodynamic seal and the product thus obtained which, being adapted to aerodynamic surfaces with complex geometries, comprises the steps of: selecting a suitable vulcanised thermoplastic elastomer both for the functional requirements required of aerodynamic seals and for those imposed by the selected manufacturing method; design of the aerodynamic seal to be manufactured by means of 3D printing by means of fused deposition modelling (FDM) or by means of pellet extrusion (PE) or by means of selective laser sintering (SLS); selection of the appropriate parameters for manufacturing an aerodynamic seal with the referred material and manufacturing process; manufacture of the aerodynamic seal according to the design made and the chosen material, 3D printing technique and chosen manufacturing parameters; heat treatment of the aerodynamic seal manufactured according to the previous steps; and mechanical shaping of the final design of the aerodynamic seal.

The present invention discloses a new concept of seal for aerodynamic surfaces the operation of which provides functional improvements in relation to the seals manufactured with the current state of the art, as well as advantages in terms of weight and manufacturing cost and times. This is possible thanks to the use of additive manufacturing for the production of seals, which enables seals to be obtained *in situ* without the need for the complex tools associated with injection moulding techniques, facilitates both geometric and functional optimisation of the seal, thereby achieving a better adaptation to aerodynamic surfaces with complex geometries, and enables greater flexibility in design, delivery times and reduced manufacturing costs. All of these are essential features that result in better prototyping and adjustment of the final design of the aerodynamic seals, to the extent that they facilitate and accelerate the optimisation processes and design changes throughout the entire seal development cycle. For example, it enables substantial modifications to be introduced to the design after conducting flight tests, which occur in the late steps of the product development and definition cycle.

More specifically, the advantages provided by the present invention are the following: (a) use of non-crosslinked materials that can be processed by means of 3D printing, using FDM, PE or SLS techniques, and that meet both mechanical and thermal resistance requirements for use in the aeronautical sector; (b) possibility of modulating the mechanical properties of the material, varying the proportion between the thermoplastic matrix and the elastomeric phase thereof, and with it the overall properties of the aerodynamic seal produced (such as its hardness or elasticity); (c) possibility of modulating the local properties of the seal by inserting materials of different hardness in precise locations of the design thereof and with excellent adhesion between layers of materials of different hardness; (d) possibility of introducing internal cavities in the aerodynamic seal with which it is also possible to modulate its local properties depending on the location and the typology thereof, whether these cavities are hollow, filled with the same or another material according to a certain geometric filling pattern during the 3D printing process itself; solids with another material introduced by means of 3D printing; or containing auxiliary structural elements that are inserted *ad hoc* making use of the possibility offered by the FDM and PE techniques of momentarily stopping the 3D printing process (as a non-limiting example of auxiliary structural elements that can be introduced into the internal cavities of the seal before continuing with the printing, there are honeycomb-type structures, bent sheet metal or metal profiles); (e) design and manufacture of aerodynamic seals with a more continuous contact between the control surfaces as it is possible to replicate in their shape the profile of aerodynamic surfaces with complex geometries, respecting contact points and interferences with respect to the original design and thereby achieving a seal with better capacities to fill the spaces between aerodynamic surfaces, improving the sealing they provide and therefore, the aerodynamic performance thereof; (f) possibility of obtaining aerodynamic seals with optimised and particularised profiles for each of the interface areas between aerodynamic surfaces, whether they are fixed, mobile or a combination of both, wherein even the particular movement envelope of a mobile surface with respect to another is considered; (g) greater possibilities of incorporating into the design and optimisation of the aerodynamic seal requirements related to its weight, its aerodynamic behaviour, the degree of interference between components, durability or maintenance; (h) easier maintenance and reduced storage needs for spare parts, since seals can be manufactured *in situ*, on demand, and in short times and runs.

### Brief description of the drawings

To complement the description provided herein, and for the purpose of helping to make the features of the invention more readily understandable, said description is accompanied by a set of drawings constituting an integral part of the same, which by way of illustration and not limitation represents the following:

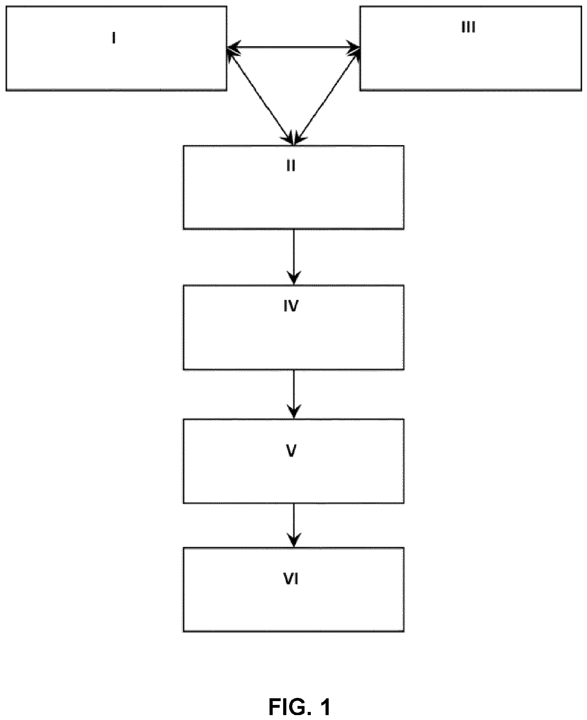

FIG. 1 shows the flow chart with the logic of the manufacturing process of an aerodynamic seal according to the invention, wherein, briefly, the steps are: (I) selection of material; (II) design of the aerodynamic seal; (III) selection of manufacturing parameters; (IV) manufacture of the aerodynamic seal; (V) heat treatment; (VI) mechanical shaping.

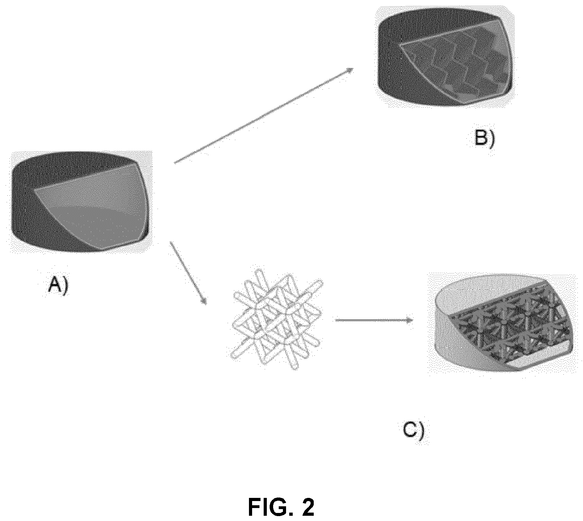

FIG. 2 shows an example of various types of internal cavities in the aerodynamic seal, both hollow and filled by means of a geometric filling pattern; wherein (A) is a hollow internal cavity, while (B) is an automatic filling with slicer software, and (C) is a filling according to our own filling pattern designed ad hoc.

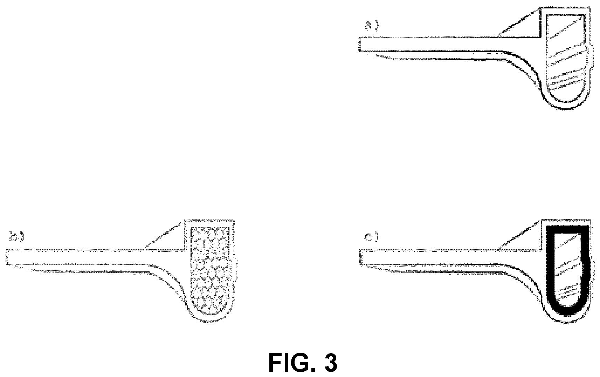

FIG. 3 shows an example of an aerodynamic seal with internal cavity (a) reinforced by means of auxiliary structural elements: honeycomb structure (b); inner profile (c).

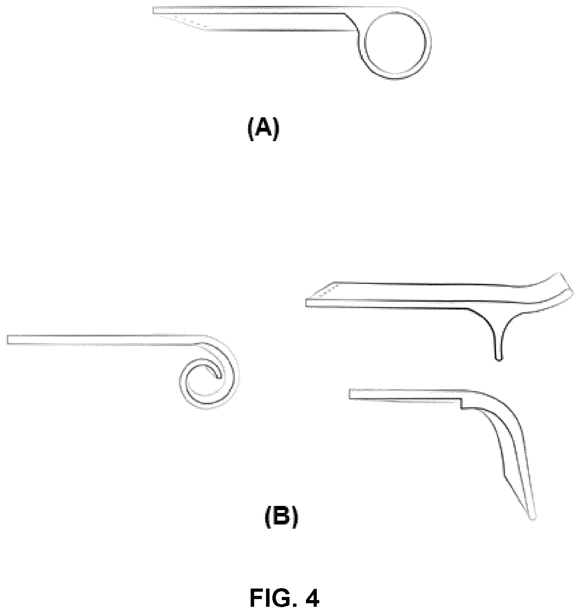

FIG. 4 shows an example of an aerodynamic seal with a standard cross section manufactured according to the current state of the art (a) versus three examples of aerodynamic seals with complex cross section and geometries manufactured according to the invention (b) that it is not possible to develop with the techniques of the current state of the art.

### Preferred embodiment of the invention

The object of the present invention is a method for manufacturing an aerodynamic seal that essentially comprises the following phases, steps or sequential processes, as described below and disclosed in **FIG. 1**.

### I. Selection of the suitable material for aerodynamic seals and additive manufacturing by means of 3D printing

In this first step, the method establishes that the manufacture of the aerodynamic seal by means of additive manufacturing technology in three dimensions is carried out using a vulcanised thermoplastic elastomer (TPV).

In the state of the art, the manufacture of polymeric elastomeric parts by means of three-dimensional printing uses two main families of materials. On the one hand, there are thermoset elastomers, which are cross-linked materials that are obtained by means of photopolymerisation, that is, stereolithography (SLA) and polyjet^{®} technology. On the other hand, thermoplastic elastomers are materials that can be processed by heating and, therefore, can be recycled and reused. These materials are processed in the form of micrometric particles for selective laser sintering (SLS), in the form of filament for fused deposition modelling (FDM) or in the form of pellets for printing by means of extrusion (PE). In the case of FDM, which is a more widespread and economical method than SLS, there are elastomeric filaments on the market that belong to the family of thermoplastic polyurethane elastomers (TPUs). However, TPUs have limitations including low solvent resistance and a stiffening temperature at low temperature around -35 °C / -40 °C. There are also plasticised copolyamides (PCTPE). Copolyamides only exist in a very high hardness range and they are flexible, not elastomeric.

A vulcanised thermoplastic elastomer material (TPV) is used in the present invention that can be processed by heating and, therefore, can be recycled and reused. These materials can be processed in the form of micrometric particles for selective laser sintering (SLS) or in filament/pellet form for fused deposition modelling (FDM) or printing by means of pellet extrusion (PE). The present invention proposes the use of vulcanised thermoplastic elastomer materials (TPV) for the manufacture in FDM, in PE or in SLS. The main advantages of these materials are their resistance to solvents such as acids (nitric, dilute sulphuric), salts or even some oils and other solvents used in the aeronautical sector. In addition, their physical properties such as hardness/elasticity can be modulated and they have glass transition temperatures below 50 or 60 °C below zero.

TPVs are made up of a thermoplastic matrix (typically polypropylene) and an elastomeric dispersed phase (in a non-limiting example, EPDM), such that depending on the proportion of the matrix and the elastomer, materials with a hardness/elasticity and variable modulus can be manufactured.

The TPVs can also be doped to obtain additional properties to those manifested by the undoped material, thus opening the possibility of having multifunctional materials with specific characteristics according to the functionality for which they are intended. Thus, as non-limiting examples, it can be pointed out that the TPVs can be doped with electrically conductive charges, which in a non-limiting example are selected from carbon black and/or carbon nanotubes, or with fluorinated particles to make them more lubricating, in a non-limiting example, Teflon microparticles.

In the present invention, TPV is used to manufacture parts both from pellets (non-filament material) and in filament form, depending on the hardness of the TPV used. It must be noted that one of the limitations of filament printers is the complexity that can be involved in printing materials with hardnesses below 60A-80A. Thus, the use of either FDM or PE has enabled elastic parts without hardness limits to be manufactured.

TPVs with hardnesses greater than 52D show low resistance to friction. The printing of this type of material in pellets or filament is, therefore, interesting in areas that require elastic elements subjected to friction, but with a low resistance to friction.

In addition, TPVs of the same family with different hardnesses can be combined in one same part taking into account that the chemical composition thereof is similar, thus ensuring adhesion between layers of materials of different hardness. With the versatility offered by three-dimensional printing, it is possible to manufacture, for example, parts with a softer internal part (more elastic) and a more rigid external part (which enables the resistance to friction to be improved).

Likewise, in the present invention, TPV is used for manufacturing parts from micrometric particles and by means of selective laser sintering (SLS).

The selected TPE-V (TPV) are a blend of polypropylene and EPDM rubber identified as TPE-V- (EPDM + PP). This material is currently being used to manufacture parts with properties similar to those made with rubber and superior to others made with traditional plastics. Its main characteristic is the elasticity and the good response to deformation thereof. In addition, service temperatures of up to 130 °C can be reached in the hardest compounds. It has a very low brittle temperature, which can reach -60 °C in the softest compounds. It is highly resistant to ozone, to aging by ultraviolet light and to the attack of different chemical agents such as acids, alcohol, detergent, bleach and water. It has a high thermal and electrical insulation (> 10e¹⁴ Ωcm) and a slow burning rate (<40 mm/min). Finally, these TPVs have a low density of about 0.96 g/cm³.

Due to all of the above, this material is suitable to meet the requirements imposed on aerodynamic seals and, at the same time, to enable the processing thereof by means of 3D additive manufacturing according to known 3D printing techniques such as FDM, PE and SLS.

### II. Design of the aerodynamic seal for manufacturing by means of 3D printing

In coordination with phase I of selection of material, the second step of the process carries out the CAD design of the seals to meet the physical conditions of the area to be sealed and in order to ensure a correct seal that minimises the impact on the aerodynamic behaviour of the surfaces on which the seal will be installed.

In coordination with phase III of selection of the manufacturing parameters, the possible limitations imposed by the specificities of the manufacturing process used are taken into account during the design of the seal. By way of example, and in a non-limiting manner, it can be mentioned that with the selection of one 3D printing technique or another, the nozzle diameter or the laser diameter impose geometric limitations on the dimensional precision with which the seal can be manufactured; or how the geometric dimensions of the printing chamber make it necessary to make as many partitions of the seal as necessary to make manufacturing within it viable.

The design phase also comprises the possibility of using different materials from the family of TPVs selected in phase I, or the possibility of inserting internal cavities in specific locations of the aerodynamic seal in order to modulate the overall and local properties thereof and with this, better meet the functional requirements that are demanded of the aerodynamic seal.

If necessary, these internal cavities can be hollow, filled with another material or filled with a certain geometric filling pattern (see **FIG. 2**). Commercial 3D printing slicer software provides a wide variety of automatic cavity filling patterns. To them it is also possible to add their own design patterns developed *ad hoc* by means of CAD tools and with the ability to be optimised to offer a better response to the specific functional requirement that must be met (for example, but not limited to, lattice structures specifically designed to give an optimised response to mechanical requirements involving compression, traction or bending). An object of the design of the aerodynamic seal is the selection of a filling pattern, whether it is an automatic one, available in the commercial slicer software used, or a specific one, defined by performing a dedicated CAD design.

Likewise, in the case of 3D printing of the aerodynamic seal using FDM or PE techniques, there is the possibility of momentarily stopping the printing process to introduce additional structural elements into the internal cavities, and before they are permanently closed, elements which also enable the properties of the aerodynamic seal to be modulated at an overall or local level. This is the case, as a non-limiting example, of the introduction of a metallic or non-metallic honeycomb structure, adapted to the internal shape of the cavity or of bent sheet metal profiles, metal profiles or composite material profiles (see **FIG. 3**).

The design of the aerodynamic seal also includes the possibility of supplying excesses to the final shape thereof such that their presence facilitates:
a) being able to ensure that the seal meets the geometric tolerances required for those cases wherein these tolerances are beyond the scope of those provided by the 3D printing technique used; b) a precise assembly of the seal in the final location thereof thanks to the absorption by these excesses of the tolerances accumulated in the manufacture or assembly of the other elements on which the seal is to be installed. These excesses are rectified as appropriate during the final mechanical shaping of the seal (phase VI).

Likewise, for FDM and PE 3D printing technologies, the design phase of the seal also includes the design of supports and auxiliary fastening structures that ensure the viability of the manufacture thereof by means of these 3D printing techniques. These auxiliary elements are designed in coordination with the selection of the 3D printing technique and the setting of the specific manufacturing parameters thereof that is carried out in phase III.

Coordination with the phases of selection of material (phase I) and the selection of manufacturing parameters (phase III) is carried out within the design phase of the aerodynamic seal in order to establish the best final design that meets all functional requirements required from the aerodynamic seal.

Finally, within the framework of an iterative design process, it is also considered that the design phase of the seal also encompasses the optimisation of the design thereof in order to improve its behaviour against the requirements and taking advantage of new elements that have emerged, such as, but not limited to, performance data collected from trials or lessons learned available from a first iteration in the design of the seal.

### III. Selection of manufacturing parameters by means of 3D printing for an aerodynamic seal,

Prior to the manufacture of the aerodynamic seal (phase IV) and in coordination with the phase of selection of material (I) and design of the aerodynamic seal (II), the selection of the 3D printing technique to be used for the manufacture thereof is carried out from among the three techniques object of the invention (FDM, PE or SLS) that best serve the chosen material, the seal design carried out and the functional requirements to be met. After that, manufacturing parameters associated with the chosen 3D printing technique are set which enable the most correct manufacture of the aerodynamic seal from the CAD files generated for this purpose (phase II) and selected material or materials (phase I).

Manufacturing parameters include geometric parameters and physical parameters.

The geometric manufacturing parameters are those that modulate the mechanical properties of the aerodynamic seal (such as the flexibility, compressibility, resistance to traction or fatigue thereof) and consequently, the selection of some values or others have an impact on the optimisation of the final seal, including seal weight, manufacturing times, and final part cost. In a non-limiting way, geometric manufacturing parameters are preferably considered to be: the number of perimeters of the contour, the filling pattern, the percentage of the filling pattern, the number of upper and lower layers or the orientation of the part with respect to the manufacturing direction.

The physical manufacturing parameters are those that fundamentally depend on the material that is selected for manufacturing the aerodynamic seal. In a non-limiting way, physical manufacturing parameters are preferably considered to be: extrusion temperature, speed and flow, bed temperature, adhesion elements, nozzle diameter or layer height. The proper setting of these manufacturing parameters is based on a previous characterisation of the behaviour of the selected TPV material when it is processed by means of the 3D printing technique that has been chosen for manufacturing the aerodynamic seal. And the object of such characterisation is to know the physical manufacturing parameters that inform about issues such as the lower limiting melting temperature of the material, the maximum extrusion temperature limited by the degradation of the material, the viscosity of the material as a function of the physical manufacturing parameters or the compatibility of the material with the material of the bed base (non-limiting list).

A practical example of application of the manufacturing method object of the invention would be the manufacture of an aerodynamic seal with a TPV material by means of 3D printing by means of the PE or FDM technique and with the physical manufacturing parameters indicated in the table below and preferably adjusted within the indicated ranges:

| | |
|---|---|
| Filament diameter (FDM) | 1.75 - 2.85 |
| Pellet diameter (PE) | 1.0 - 6.0 mm |
| Extruder nozzle diameter | 0.2 - 1.0 mm |
| Layer height | 0.1 - 0.4 mm |
| Extrusion speed | 5 - 30 mm/s |
| Extruder temperature | 180 °C - 260 °C |
| Bed temperature | 0 °C - 100 °C |

Likewise, a practical example of application of the manufacturing method object of the invention would be the manufacture of an aerodynamic seal with a TPV material by means of 3D printing by means of the SLS technique and with the physical manufacturing parameters indicated in the table below and preferably adjusted within the indicated ranges:

| | |
|---|---|
| Laser diameter | 400 µm |
| Layer height | 100-200 µm |
| Scan speed | 1000-5000 mm/s |
| Scan spacing | 100-200 µm |
| Laser energy | 3-27W |
| Bed temperature | 75 °C-105 °C |
| Chamber temperature | 50 °C-75 °C |
| Particle size | 40-200 µm |

It is important to highlight that the melt viscosity of this type of materials (TPV) can be modulated since it directly depends on the molecular weight of the thermoplastic matrix. Thus, using thermoplastics with a lower molecular weight will produce lower viscosity TPVs that will coalesce more easily, and TPVs formed using a thermoplastic matrix with a higher molecular weight will require more powerful processing conditions. In the case of TPUs (polyurethane thermoplastic elastomers) this property cannot be modulated in the same way and they are usually materials with a high melt viscosity.

### IV. Manufacture of an aerodynamic seal with a vulcanised thermoplastic elastomer by means of additive manufacturing technology

The aerodynamic seal is manufactured by means of additive manufacturing by means of 3D printing with the vulcanised thermoplastic elastomer (TPV) selected according to the design carried out and the manufacturing technique and parameters set during the preceding phases: phases I, II and III, respectively.

### V. Heat treatment of the aerodynamic seal

The seal obtained in phase IV is introduced into a climatic chamber and subjected to a heat treatment consisting of a preheating cycle, introduction of the seal in the chamber, maintenance at a temperature below 200 °C and cooling to room temperature. Once the material has been selected and the specific additive technique to be used has been defined, heat treatment is an essential step to achieve dimensionally stable parts. The application of a heat treatment to the materials used in the invention is not evident as a way to relax tensions (it is usually something more typical of metallic materials). Therefore, thanks to the indicated heat treatment, it is possible to obtain a seal with the desired geometry.

### VI. Mechanical shaping of the aerodynamic seal

Finally, the aerodynamic seal resulting from the execution of the preceding phases (I to V) is mechanically shaped in order to remove the potential excesses defined in phase III and to make the final adjustment of the aerodynamic seal to the dimensional requirements thereof, if these are outside the scope of the 3D printing technique used, or the assembly that is applied thereto. In a non-limiting manner, the mechanical shaping of the aerodynamic seal is carried out through the use of shears, guillotine, scissors, drills and/or punches.

## Claims

1. A method for manufacturing an aerodynamic seal for fixed or mobile aerodynamic surfaces in aircrafts or a combination of both, of complex geometry comprising the steps of:
selecting a material from the family of vulcanised thermoplastic elastomers suitable for the requirements to be met by aerodynamic seals and for additive manufacturing by means of 3D printing;
designing the aerodynamic seal that enables manufacturing by means of the 3D printing technique and the selected material;
selecting the manufacturing parameters for the aerodynamic seal design carried out and material selected;
manufacturing the aerodynamic seal using the selected material, design and manufacturing parameters, by means of additive manufacturing by means of 3D printing; the method being **characterised in that** it further comprises the steps of:
heat treatment of the aerodynamic seal manufactured according to the preceding steps,
wherein the aerodynamic seal is subjected to a heat treatment in a climatic chamber consisting of a preheating cycle, introduction of the seal into the chamber, maintenance at a temperature equal to or less than 200 °C and cooling to room temperature, and
mechanical shaping to obtain the final geometry of the aerodynamic seal in accordance with the dimensional and assembly requirements that apply thereto.

2. The manufacturing method according to claim 1, wherein 3D printing is applied by means of fused deposition modelling (FDM) or by means of pellet extrusion (PE) or by means of selective laser sintering (SLS).

3. The manufacturing method according to claim 1, wherein 3D printing is applied by means of fused deposition modelling wherein the filament diameter is equal to or less than 2.85 mm, the diameter of the extruder nozzle is equal to or less than 1.0 mm, the layer height is equal to or less than 0.4 mm, the extrusion speed is equal to or less than 30 mm/s, the extruder temperature is equal to or less than 260 °C and the bed temperature is equal to or less than 100 °C.

4. The manufacturing method according to claim 1, wherein 3D printing is applied by means of the pellet extrusion technique wherein the pellet diameter is equal to or less than 6.0 mm, the diameter of the extruder nozzle is equal to or less than 1.0 mm, the layer height is equal to or less than 0.4 mm, the extrusion speed is equal to or less than 30 mm/s, the extruder temperature is equal to or less than 260 °C and the bed temperature is equal to or less than 100 °C.

5. The manufacturing method according to claim 1, wherein 3D printing is applied by means of the selective laser sintering technique wherein the diameter of the laser is 400 µm, the layer height is comprised between 100 and 200 µm, the scanning speed is comprised between 1000-5000 mm/s, the scan spacing is comprised between 100-200 µm, the laser energy is comprised between 5W and 27W, the bed temperature is comprised between 75 °C and 105 °C, the chamber temperature is comprised between 50 °C and 75 °C and the particle size is comprised between 40 µm and 200 µm.

6. The method for manufacturing an aerodynamic seal according to any one of claims 1 to 5, wherein the vulcanised thermoplastic material has a variable hardness, preferably between 50A and 52D, wherein for hardnesses above 90A they have been manufactured by means of fused deposition and wherein for hardnesses below 72-80A they have been manufactured by means of pellet extrusion.

7. The manufacturing method according to claim 6, wherein the aerodynamic seal has been manufactured using a vulcanised thermoplastic material of hardness 40D by means of fused deposition.

8. An aerodynamic seal obtained according to the method of any one of claims 1 to 7 consisting of a vulcanised thermoplastic elastomer manufactured by means of 3D additive manufacturing technology with a profile that can adapt to a space existing between aerodynamic surfaces of an aircraft, whether they are fixed, mobile or a combination of both.

9. The seal according to claim 8, wherein the vulcanised thermoplastic material preferably has a hardness greater than 50A and less than 52D or a combination of vulcanised thermoplastics with different degrees of hardness.

10. The aerodynamic seal according to any one of claims 8 to 9 and wherein the vulcanised thermoplastic material has been doped in order to obtain additional properties not present in the undoped material.

11. The aerodynamic seal according to any one of claims 8 to 10, which incorporates internal cavities in specific locations of the seal, whether they are hollow, filled with another material, filled with a certain geometric filling pattern or filled with an additional structural element.

## Patentansprüche

1. Verfahren zum Herstellen einer aerodynamischen Dichtung für feststehende oder bewegliche aerodynamische Flächen in Luftfahrzeugen oder einer Kombination von beiden mit komplexer Geometrie, umfassend die folgenden Schritte:
Auswählen eines Materials aus der Familie der vulkanisierten thermoplastischen Elastomere, das für die Anforderungen, die von den aerodynamischen Dichtungen zu erfüllen sind, und für die additive Herstellung mittels 3D-Druck geeignet ist;
Auslegen der aerodynamischen Dichtung, die mit Hilfe der 3D-Drucktechnik und des ausgewählten Materials das Herstellen ermöglicht;
Auswählen der Herstellungsparameter für die durchgeführte Auslegung der aerodynamischen Dichtung und des ausgewählten Materials;
Herstellen der aerodynamischen Dichtung unter Verwendung des ausgewählten Materials, der ausgewählten Auslegung und der ausgewählten Herstellungsparameter mittels additiver Herstellung durch 3D-Druck;
wobei das Verfahren **dadurch gekennzeichnet ist, dass** es ferner die folgenden Schritte umfasst:
Wärmebehandlung der gemäß den vorhergehenden Schritten hergestellten aerodynamischen Dichtung,
wobei die aerodynamische Dichtung einer Wärmebehandlung in einer Klimakammer unterworfen wird, die aus einem Vorwärmzyklus, dem Einbringen der Dichtung in die Kammer, der Aufrechterhaltung einer Temperatur von gleich oder weniger als 200 °C und dem Kühlen auf Raumtemperatur besteht, und
mechanischer Formgebung, um die Endgeometrie der aerodynamischen Dichtung gemäß den für sie geltenden Anforderungen an Abmessungen und Zusammenbau zu erhalten.

2. Herstellungsverfahren gemäß Anspruch 1, wobei der 3D-Druck mittels Schmelzschichtmodellierung (FDM) oder mittels Pellet-Extrusion (PE) oder mittels selektivem Lasersintern (SLS) angewendet wird.

3. Herstellungsverfahren gemäß Anspruch 1, wobei das 3D-Drucken mittels Schmelzschichtmodellierung angewendet wird, wobei der Filamentdurchmesser gleich oder kleiner als 2,85 mm ist, der Durchmesser der Extruderdüse gleich oder kleiner als 1,0 mm ist, die Schichthöhe gleich oder kleiner als 0,4 mm ist, die Extrusionsgeschwindigkeit gleich oder kleiner als 30 mm/s ist, die Extrudertemperatur gleich oder kleiner als 260 °C ist und die Betttemperatur gleich oder kleiner als 100 °C ist.

4. Herstellungsverfahren gemäß Anspruch 1, wobei das 3D-Drucken mittels der Pellet-Extrusionstechnik angewendet wird, wobei der Pelletdurchmesser gleich oder kleiner als 6,0 mm ist, der Durchmesser der Extruderdüse gleich oder kleiner als 1,0 mm ist, die Schichthöhe gleich oder kleiner als 0,4 mm ist, die Extrusionsgeschwindigkeit gleich oder kleiner als 30 mm/s ist, die Extrudertemperatur gleich oder kleiner als 260 °C ist und die Betttemperatur gleich oder kleiner als 100 °C ist.

5. Herstellungsverfahren gemäß Anspruch 1, wobei das 3D-Drucken mittels der selektiven Lasersintertechnik angewendet wird, wobei der Durchmesser des Lasers 400 µm ist, die Schichthöhe zwischen 100 und 200 µm umfasst, die Scangeschwindigkeit zwischen 1000-5000 mm/s umfasst, der Scanabstand zwischen 100-200 µm umfasst, die Laserenergie zwischen 5 W und 27 W umfasst, die Betttemperatur zwischen 75 °C und 105 °C umfasst, die Kammertemperatur zwischen 50 °C und 75 °C umfasst und die Teilchengröße zwischen 40 µm und 200 µm umfasst.

6. Verfahren zum Herstellen einer aerodynamischen Dichtung gemäß einem der Ansprüche 1 bis 5, wobei das vulkanisierte thermoplastische Material eine variable Härte, vorzugsweise zwischen 50A und 52D, aufweist, wobei sie für Härten über 90A durch Schmelzabscheidung hergestellt wurden und wobei sie für Härten unter 72-80A durch Pellet-Extrusion hergestellt wurden.

7. Herstellungsverfahren gemäß Anspruch 6, bei dem die aerodynamische Dichtung unter Verwendung eines vulkanisierten thermoplastischen Materials der Härte 40D durch Schmelzabscheidung hergestellt wurde.

8. Aerodynamische Dichtung, erhalten gemäß dem Verfahren nach einem der Ansprüche 1 bis 7, bestehend aus einem vulkanisierten thermoplastischen Elastomer, hergestellt mittels der Technologie der additiven Herstellung in 3D, mit einem Profil, das sich an den Zwischenraum zwischen den aerodynamischen Flächen eines Luftfahrzeugs anpassen kann, unabhängig davon, ob diese feststehend, beweglich oder eine Kombination aus beidem sind.

9. Dichtung gemäß Anspruch 8, wobei das vulkanisierte thermoplastische Material vorzugsweise eine Härte von mehr als 50A und weniger als 52D oder eine Kombination von vulkanisierten Thermoplasten mit unterschiedlichen Härtegraden aufweist.

10. Aerodynamische Dichtung gemäß einem der Ansprüche 8 bis 9, und wobei das vulkanisierte thermoplastische Material dotiert wurde, um zusätzliche Eigenschaften zu erhalten, die im undotierten Material nicht vorhanden sind.

11. Aerodynamische Dichtung gemäß einem der Ansprüche 8 bis 10, die innere Hohlräume an bestimmten Standorten der Dichtung einbezieht, unabhängig davon, ob sie hohl, mit einem anderen Material gefüllt, mit einem bestimmten geometrischen Füllmuster gefüllt oder mit einem zusätzlichen Strukturelement gefüllt sind.

## Revendications

1. Procédé de fabrication d'un joint aérodynamique pour surfaces aérodynamiques fixes ou mobiles dans des aéronefs ou une combinaison des deux, de géométrie complexe comprenant les étapes consistant à :
sélectionner un matériau dans la famille des élastomères thermoplastiques vulcanisés adapté aux exigences auxquelles doivent répondre les joints aérodynamiques et à la fabrication additive par impression 3D ;
concevoir le joint aérodynamique qui permet la fabrication au moyen de la technique d'impression 3D et du matériau sélectionné ;
sélectionner les paramètres de fabrication pour la conception du joint aérodynamique réalisée et le matériau sélectionné ;
fabriquer le joint aérodynamique à partir du matériau choisi, conception et paramètres de fabrication, au moyen de fabrication additive par impression 3D ;
le procédé étant **caractérisé en ce qu'**il comprend en outre les étapes consistant à :
traitement thermique du joint aérodynamique fabriqué selon les étapes précédentes,
dans lequel le joint aérodynamique est soumis à un traitement thermique dans une chambre climatique constitué d'un cycle de préchauffage, introduction du joint dans la chambre, maintien à une température égale ou inférieure à 200 °C et refroidissement à température ambiante, et
mise en forme mécanique pour obtenir la géométrie finale du joint aérodynamique conformément aux exigences dimensionnelles et d'assemblage qui sont applicables à celui-ci.

2. Procédé de fabrication selon la revendication 1, dans lequel l'impression 3D est appliquée au moyen d'une modélisation par dépôt en fusion (FDM) ou au moyen d'une extrusion de pastilles (PE) ou au moyen d'un frittage sélectif par laser (SLS).

3. Procédé de fabrication selon la revendication 1, dans lequel l'impression 3D est appliquée au moyen d'une modélisation par dépôt en fusion dans laquelle le diamètre du filament est égal ou inférieur à 2,85 mm, le diamètre de la buse de la boudineuse est égal ou inférieur à 1,0 mm, la hauteur de couche est égale ou inférieure à 0,4 mm, la vitesse d'extrusion est égale ou inférieure à 30 mm/s, la température de la boudineuse est égale ou inférieure à 260 °C et la température du lit est égale ou inférieure à 100 °C.

4. Procédé de fabrication selon la revendication 1, dans lequel l'impression 3D est appliquée au moyen de la technique d'extrusion de pastilles dans laquelle le diamètre des pastilles est égal ou inférieur à 6,0 mm, le diamètre de la buse de la boudineuse est égal ou inférieur à 1,0 mm, la hauteur de couche est égale ou inférieure à 0,4 mm, la vitesse d'extrusion est égale ou inférieure à 30 mm/s, la température de la boudineuse est égale ou inférieure à 260 °C et la température du lit est égale ou inférieure à 100 °C.

5. Procédé de fabrication selon la revendication 1, dans lequel l'impression 3D est appliquée au moyen de la technique de frittage sélectif par laser dans laquelle le diamètre du laser est de 400 µm, la hauteur de couche est comprise entre 100 et 200 µm, la vitesse de balayage est comprise entre 1 000 et 5 000 mm/s, l'espacement des balayages est compris entre 100 et 200 µm, l'énergie laser est comprise entre 5W et 27W, la température du lit est comprise entre 75 °C et 105 °C, la température de la chambre est comprise entre 50 °C et 75 °C et la taille des particules est comprise entre 40 µm et 200 µm.

6. Procédé de fabrication d'un joint aérodynamique selon l'une quelconque des revendications 1 à 5, dans lequel le matériau thermoplastique vulcanisé présente une dureté variable, de préférence entre 50A et 52D, dans lequel pour des duretés supérieures à 90A, ils ont été fabriqués par dépôt en fusion et dans lequel pour des duretés inférieures à 72-80A, ils ont été fabriqués par extrusion de pastilles.

7. Procédé de fabrication selon la revendication 6, dans lequel le joint aérodynamique a été fabriqué en utilisant un matériau thermoplastique vulcanisé de dureté 40D par dépôt en fusion.

8. Joint aérodynamique obtenu selon le procédé de l'une quelconque des revendications 1 à 7 constitué d'un élastomère thermoplastique vulcanisé fabriqué par technologie de fabrication additive 3D avec un profil qui peut s'adapter à un espace existant entre les surfaces aérodynamiques d'un aéronef, qu'ils soient fixes, mobiles ou une combinaison des deux.

9. Joint selon la revendication 8, dans lequel le matériau thermoplastique vulcanisé a de préférence une dureté supérieure à 50A et inférieure à 52D ou une combinaison de thermoplastiques vulcanisés avec différents degrés de dureté.

10. Joint aérodynamique selon l'une quelconque des revendications 8 à 9 et dans lequel le matériau thermoplastique vulcanisé a été dopé afin d'obtenir des propriétés supplémentaires qui ne sont pas présentes dans le matériau non dopé.

11. Joint aérodynamique selon l'une quelconque des revendications 8 à 10, qui intègre des cavités internes à des endroits précis du joint, qu'ils soient creux, rempli d'un autre matériau, rempli d'un certain motif de remplissage géométrique ou rempli d'un élément structurel supplémentaire.
